# EUROPÄISCHE PATENTSCHRIFT

(11) **EP 0 642 546 B1**
(45) Veröffentlichungstag und Bekanntmachung des Hinweises auf die Patenterteilung: **30.10.1996**
(21) Anmeldenummer: 93910002.0
(22) Anmeldetag: 17.05.1993
(51) Int. Cl.: C08J 9/16, C08F 257/02

(54) **EXPANDIERBARE STYROLPOLYMERISATE MIT HOHER WÄRMEFORMBESTÄNDIGKEIT**
EXPANDABLE STYRENE POLYMERS WITH HIGH HEAT-FORMING RESISTANCE
POLYMERISATS DE STYRENE EXPANSIBLES, A HAUTE RESISTANCE A LA DEFORMATION A CHAUD

(30) Priorität: 26.05.1992 DE 4217383
(43) Veröffentlichungstag der Anmeldung: 15.03.1995
(73) Patentinhaber: BASF Aktiengesellschaft, 67063 Ludwigshafen (DE)
(72) Erfinder: HENN, Rolf, D-6834 Ketsch (DE); BESECKE, Siegmund, D-3250 Hameln (DE); DECKERS, Andreas, D-55234 Flomborn (DE); GUENTHERBERG, Norbert, D-6720 Speyer (DE); BRUDERMUELLER, Martin, D-6800 Mannheim 1 (DE); NESTLER, Gerhard, D-6700 Ludwigshafen (DE); WASSMER, Karl-Heinz, D-6703 Limburgerhof (DE)
(86) Internationale Anmeldenummer: EP9301222
(87) Internationale Veröffentlichungsnummer: WO9324561

(56) Entgegenhaltungen:
- EP-A- 0 336 212
- DATABASE WPIL Week 9006, 25. Dezember 1989 Derwent Publications Ltd., London, GB; AN 041672
- DATABASE WPIL Week 8848, 20. Oktober 1988 Derwent Publications Ltd., London, GB; AN 341921
- DATABASE WPIL Week 9003, 4. Dezember 1989 Derwent Publications Ltd., London, GB; AN 019511

## Beschreibung

Die Erfindung betrifft expandierbare Styrolpolymerisate mit hoher Wärmeformbeständigkeit. Die Erfindung betrifft insbesondere solche expandierbaren Styrolpolymerisate, die Styrol/Methacrylamid-Copolymerisate auf der Basis bestimmter N-substituierter Methacrylamide enthalten, ein bevorzugtes Verfahren zu ihrer Herstellung sowie die damit erhaltenen Schaumstoffe.

Expandierbare Styrolpolymerisate mit hoher Wärmeformbeständigkeit sind aus der EP-A 294 783, EP-A 383 133, EP-A 419 966 und der US-A 4 298 703 bekannt. Diese enthalten Poly-1,4-phenylenether, Poly-1,4-phenylensulfid oder Copolymere von Styrol mit Maleinsäure(anhydrid) oder N-substituiertem Maleinimid.

Diese bekannten expandierbaren Styrolpolymerisate haben jedoch einige Nachteile. So lassen sich Copolymere von Styrol mit N-substituiertem Maleinimid nur mittels eines Extruders schäumen. Aus eigenen Versuchen ist bekannt, daß die Copolymerisation von Styrol mit Maleinimid in wäßriger Suspension in Gegenwart eines Treibmittels keine expandierbaren Polymerisate ergibt. Bei Verwendung von Poly-2,6-dimethyl-1,4-phenylenether (PPE) werden Formkörper erhalten, die allmählich zur Vergilbung neigen. Außerdem ist die Herstellung und Verarbeitung von Polysytrol/PPE-Blends oder Interpolymerisaten zu expandierbaren, runden Perlen verhältnismäßig aufwendig.

Aus der JP-A 63/273612 ist ein Copolymer bekannt, das Methacrylamid, Styrolderivate und Acrylnitril enthält. Das Copolymer soll sich durch verbesserte Eigenschaften hinsichtlich Fluidität, Transparenz, Wärmebeständigkeit, Widerstand gegenüber mechanischen Einwirkungen und Vergilbung auszeichnen. Es kann zur Herstellung von Formkörpern oder Schaumstoffen verwendet werden.

Aufgabe der vorliegenden Erfindung war es daher, ein expandierbares Styrolpolymerisat bereitzustellen, das die geschilderten Nachteile nicht mehr aufweist.

Diese Aufgabe wird überraschend gelöst durch expandierbare Styrolpolymerisate, enthaltend
a) 0 bis 90 Gew.-% eines von b) unterschiedlichen Styrolpolymerisats oder Styrolcopolymerisats mit mindestens 50 Gew.-% einpolymerisiertem Styrol,
b) 10 bis 100 Gew.-% eines Styrol/Methacrylamid-Copolymerisats, das zu 0,5 bis 50 Gew.-% aus mindestens einem einpolymerisierten N-substituierten Methacrylamid der allgemeinen Formel I, 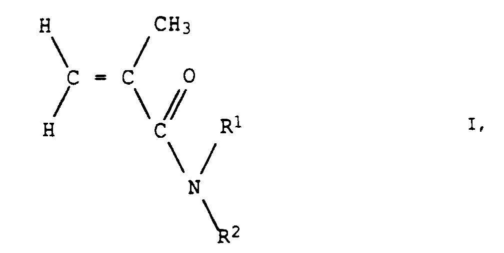 worin R¹ und R² gleich oder verschieden sind und Wasserstoff, C₁- bis C₁₅-Alkyl, C₆- bis C₁₆-Cycloalkyl oder C₆-bis C₂₀-Aryl bedeuten, wobei im Falle von Substituenten R¹ und R² mit mindestens 2 Kohlenstoffatomen mindestens 2 Kohlenstoffatome über Heteroatome verknüpft sein können, besteht, und
c) 1 bis 15 Gew.-%, bezogen auf die Summe von a) und b), eines aliphatischen C₃- bis C₉-Kohlenwasserstoffs und/oder Kohlendioxid als Treibmittel.

Gegenstand der Erfindung ist außerdem ein Verfahren zur Herstellung dieser expandierbaren Styrolpolymerisate, wobei man eine Lösung von mindestens einem substituierten Methacrylamid der Formel I 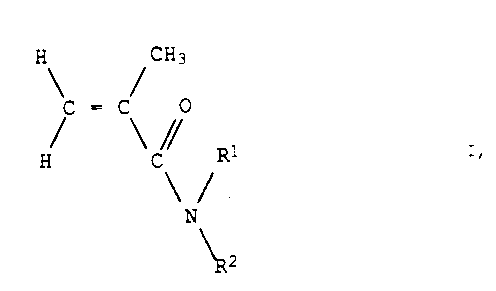 worin R¹ und R² gleich oder verschieden sind und Wasserstoff, C₁- bis C₁₅-Alkyl, C₆- bis C₁₆-Cycloalkyl oder C₆- bis C₂₀-Aryl bedeuten, wobei im Falle von Substituenten R¹ und R² mit mindestens 2 Kohlenstoffatomen mindestens 2 Kohlenstoffatome über Heteroatome verknüpft sein können, und gegebenenfalls eines Styrolpolymerisats oder Styrolcopolymerisats mit mindestens 50 Gew.-% einpolymerisiertem Styrol in Styrol in wäßriger Suspension polymerisiert und während oder nach der Polymerisation das Treibmittel zugibt.

Des weiteren sind Gegenstand der Erfindung Schaumstoffe der Dichte 0,01 bis 0,2 g/cm³, enthaltend
a) 0 bis 90 Gew.-% eines von b) unterschiedlichen Styrolpolymerisats oder Styrolcopolymerisats mit mindestens 50 Gew.-% einpolymerisiertem Styrol, und
b) 10 bis 100 Gew.-% eines Styrol/Methacrylamid-Copolymerisats, das zu 0,5 bis 50 Gew.-% aus mindestens einem einpolymerisierten N-substituierten Methacrylamid der allgemeinen Formel I 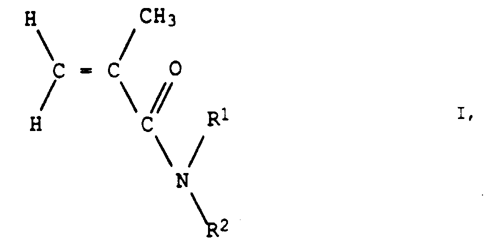 worin R¹ und R² gleich oder verschieden sind und Wasserstoff, C₁- bis C₁₅-Alkyl, C₆- bis G₁₆-Cycloalkyl oder C₆- bis C₂₀-Aryl bedeuten, wobei im Falle von Substituenten R¹ und R² mit mindestens 2 Kohlenstoffatomen mindestens 2 Kohlenstoffatome über Heteroatome verknüpft sein können, besteht.

Geeignete Styrolpolymerisate a) sind Polystyrol und Copolymere, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie N-Vinylcarbazol, Maleinsäureanhydrid. Vorteilhaft enthält das Styrolpolymerisat eine geringe Menge eines Vernetzers einpolymerisiert, d.h. einer Verbindung mit mehr als einer, vorzugsweise zwei, polymerisierbaren Doppelbindungen, wie Divinylbenzol, Butadien oder Butandioldiacrylat. Der Vernetzer wird im allgemeinen in einer Menge von 0,005 bis 0,05 Mol-%, bezogen auf Styrol, verwendet. Styrolpolymerisate, die mindestens 5 Gew.-%, im allgemeinen 5 bis 17 Gew.-%, vorzugsweise 5 bis 10 Gew.-% Acrylnitril einpolymerisiert enthalten, führen zu Formmassen, die sich durch eine hohe Ölbeständigkeit auszeichnen. Vorteilhaft setzt man dazu als Styrolpolymerisat ein Gemisch aus Polystyrol und einem styrollöslichen Styrol-Acrylnitril-Copolymeren ein, insbesondere ein Gemisch aus 50 bis 83 Gew.-%, vorzugsweise 60 bis 80 Gew.-% Polystyrol und 17 bis 50 Gew.-%, insbesondere 20 bis 40 Gew.-% eines Styrol-Acrylnitril-Copolymeren mit einem Gehalt an einpolymerisiertem Acrylnitril von etwa 15 bis 35 Gew.-%, insbesondere 20 bis 30 Gew.-%.

Das Styrolpolymerisat oder Styrolcopolymerisat a) wird verwendet in Mengen von 0 bis 90 Gew.-%, vorzugsweise 0 bis 50 Gew.-%, insbesondere 0 bis 20 Gew.-%, bezogen auf die Summe von a) und b).

Die expandierbaren Styrolpolymerisate enthalten als erfindungswesentlichen Bestandteil b) 10 bis 100 Gew.-%, vorzugsweise 50 bis 100 Gew.-%, insbesondere 80 bis 100 Gew.-% eines Styrol-Methacrylamid-Copolymerisats, das zu 0,5 bis 50 Gew.-%, vorzugsweise 3 bis 45 Gew.-% und besonders bevorzugt 5 bis 40 Gew.-% aus mindestens einem einpolymerisierten N-substituierten Methacrylamid der allgemeinen Formel I 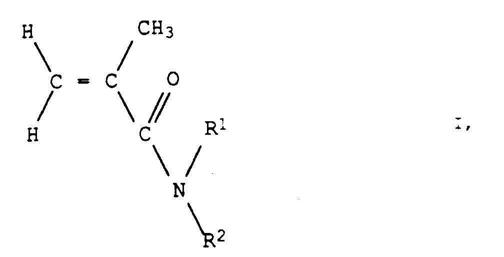 worin R¹ und R² gleich oder verschieden sind und Wasserstoff, C₁- bis C₁₅-Alkyl, C₆- bis C₁₆-Cycloalkyl oder C₆- bis C₂₀-Aryl bedeuten, besteht.

Wenn die Substituenten R¹ und R² mindestens 2 Kohlenstoffatome aufweisen, können mindestens 2 Kohlenstoffatome über Heteroatome verknüpft sein. Geeignete Heteroatome sind Sauerstoff, Schwefel und Stickstoff.

Beispiele für derartige Substituenten R¹ und/oder R² sind -CH₂-O-CH₃, -CH₂-S-CH₃, -C₂H₄-O-CH₃, -C₂H₄-O-C₂H₅ etc.

Es werden bevorzugt N-substituierte Methacrylamide eingesetzt, bei denen R¹ Wasserstoff und R² Phenyl, Cyclohexyl, Benzyl oder 1-Naphthyl bedeutet. In einer besonders bevorzugten Ausführungsform bedeutet R² Phenyl oder Cyclohexyl.

Die erfindungsgemäß eingesetzten N-substituierten Methacrylamide der allgemeinen Formel I sind an sich bekannt und lassen sich beispielsweise gemäß DE-C 31 30 508, DE-C 28 09 102, DE-C 31 23 970 und DE-C 31 31 096 herstellen.

Die erfindungsgemäßen Styrol/Methacrylamid-Copolymerisate können darüber hinaus weitere Comonomere wie beispielsweise Acrylnitril, Acrylsäureester und -amide, Methacrylsäureester und/oder substituierte Maleinimide in einer Menge von bis zu 20 Gew.-% enthalten.

Als Treibmittel c) enthalten die expandierbaren Styrolpolymerisate 1 bis 15 Gew.-%, vorzugsweise.3 bis 8 Gew.-%, bezogen auf a) und b), eines aliphatischen C₃- bis C₉-Kohlenwasserstoffs (z.B. Propan, Butan, Isobutan, n-Pentan, Neopentan und/oder Hexan) und/oder Kohlendioxid. Bei der Verwendung eines Treibmittels, das Kohlendioxid enthält oder aus diesem besteht, enthalten die expandierbaren Styrolpolymerisate vorzugsweise einen Kohlendioxid-Absorber gemäß der deutschen Patentanmeldung P 41 37 405.3.

Die expandierbaren Styrolpolymerisate können ferner übliche Zusatzstoffe in wirksamen Mengen enthalten, wie Farbstoffe, Füllstoffe, Stabilisatoren, Synergisten, Keimbildner, Gleitmaterial, Antistatika, beim Verschäumen antiverklebend wirkende Stoffe und Mittel zur Verkürzung der Entformzeit beim Ausschäumen.

Als Zusatzstoffe sind gemäß der Lehre der DE-C 39 15 602 auch styrollösliche Elastomere geeignet. Diese Zusätze erhöhen die Elastizität des Schaumstoffs.

Die expandierbaren Styrolpolymerisate liegen im allgemeinen in Form von Perlen vor und haben vorteilhaft einen mittleren Durchmesser von 0,1 bis 6 mm, insbesondere 0,3 bis 3 mm.

Die Herstellung der erfindungsgemäßen expandierbaren Styrolpolymerisate erfolgt vorzugsweise durch Suspensionspolymerisation in Gegenwart von Radikale bildenden Initiatoren (beispielsweise Peroxide). Hierzu werden Styrol, mindestens ein N-substituiertes Methacrylamid der allgemeinen Formel I und gegebenenfalls weitere Comonomere und/oder ein Styrolpolymerisat oder Styrolcopolymeriat a) in wäßriger Suspension, zweckmäßig unter Zusatz eines üblichen Suspendierhilfsmittels, polymerisiert.

Styrol, mindestens ein N-substituiertes Methacrylamid der allgemeinen Formel I, und gegebenenfalls weitere Comonomere können zu Beginn der Polymerisation gemeinsam vorgelegt werden oder zu unterschiedlichen Zeiten und in unterschiedlicher Reihenfolge dem Polymerisationsansatz beigefügt werden.

Vorzugsweise werden Styrol, mindestens ein N-substituiertes Methacrylamid und gegebenenfalls weitere Comonomere gemeinsam mit dem Polymerisationsinitiator zu Beginn der Polymerisation vorgelegt.

Es ist allerdings auch möglich, ein Styrol/Methacrylamid-Copolymerisat, das zu 0,5 bis 50 Gew.-% aus mindestens einem einpolymerisierten N-substituierten Methacrylamid der allgemeinen Formel I besteht, in Styrol aufzulösen und anschließend in wäßriger Suspension zu polymerisieren.

Vorteilhaft setzt man bei der Polymerisation einen Regler oder eine geringe Menge, etwa 0,005 bis 0,05 Mol-%, bezogen auf Styrol, eines Vernetzers zu. Das Treibmittel und gegebenenfalls die Zusatzstoffe können dabei zweckmäßigerweise bei der Polymerisation mit vorgelegt werden oder im Laufe der Polymerisation zugefügt werden. Es kann auch erst nach beendeter Polymerisation dem Ansatz zugefügt werden.

Die erhaltenen perlförmigen expandierbaren Styrolpolymerisate werden nach Beendigung der Polymerisation von der wäßrigen Phase abgetrennt, gewaschen und getrocknet.

Für die Herstellung von Schaumstoffen werden die expandierbaren Styrolpolymerisate in bekannter Weise durch Erhitzen auf Temperaturen oberhalb ihres Erweichungspunktes, beispielsweise mit Heißluft oder vorzugsweise mit Dampf expandiert. Die erhaltenen Schaumstoffpartikel können nach dem Abkühlen und gegebenenfalls einer Zwischenlagerung durch erneutes Erhitzen weiter aufgeschäumt werden. Sie können anschließend in bekannter Weise in nicht gasdicht schließenden Formen zu Formteilen verschweißt werden.

Die erhaltenen Schaumstoffe weisen eine Dichte von etwa 0,01 bis 0,2 g/cm³ auf.

Die erfindungsgemäßen expandierbaren Styrolpolymerisate und die damit erhaltenen Schaumstoffe weisen zahlreiche Vorteile auf.

Die erfindungsgemäßen expandierbaren Styrolpolymerisate zeichnen sich beispielsweise durch eine verbesserte Verschäumbarkeit (d.h. geringere minimale Schüttdichte bei gleichem Treibmittelgehalt) aus. Sie lassen sich durch Polymerisation in wäßriger Suspension in Perlform herstellen, haben einen geringen Restmonomer-Gehalt, sind weiß und haben keine Neigung zur Vergilbung. Sie können mit den üblichen und im Vergleich zu expandierbaren Teilchen aus PPE/PS-Blends oder Interpolymerisaten geringeren Treibmittelmengen gut zu vorgeschäumten Teilchen expandiert werden, die sich mit der üblichen Technologie zu Formkörpern verschweißen lassen.

Die mit den erfindungsgemäßen expandierbaren Styrolpolymerisaten erhaltenen Schaumstoffe zeichnen sich durch eine hohe Wärmeformbeständigkeit, einen hohen Verschweißungsgrad der Perlen, eine hohe Erweichungstemperatur nach Vicat, eine verbesserte Zellstruktur, eine äußerst geringe Neigung zur Vergilbung und eine überraschende Ölbeständigkeit aus.

Verglichen mit wärmeformbeständigen expandierbaren Styrolpolymerisaten auf der Basis von Polyphenylenether zeichnen sich die erfindungsgemäßen expandierbaren Styrolpolymerisate durch die Möglichkeit der einfacheren Herstellung aus. Beispielsweise sind die bei der Auflösung eines PPE/Polystyrol-Blends (90 Gew.-% PPE) in Styrol erhaltenen Lösungen in nachteiliger Weise höherviskos. Außerdem wird die radikalische Polymerisation durch die Anwesenheit von PPE zumindest teilweise inhibiert.

### Beispiele

Die expandierbaren Styrolpolymerisate der Beispiele 1 bis 8 und der Vergleichsbeispiele 1 bis 4 wurden durch Suspensionspolymerisation in Gegenwart eines Treibmittels und die expandierbaren Styrolpolymerisate der Vergleichsbeispiele 5 bis 7 durch Nachimprägnierung mit dem Treibmittel in Suspension hergestellt. Die Weiterverarbeitung der expandierbaren Styrolpolymerisate zu Formkörpern sowie die Bestimmung der jeweiligen Eigenschaften erfolgte wie für Beispiel 1 beschrieben, sofern sich aus dem Zusammenhang nichts anderes ergibt.

In den erfindungsgemäßen Beispielen wurde als N-substituiertes Methacrylamid N-Phenyl-methacrylamid (Beispiele 1 bis 6) oder N-Cyclohexyl-methacrylamid (Beispiele 7 und 8) verwendet.

In den Vergleichsbeispielen wurden expandierbare Styrolpolymerisate verwendet, deren Polymerkomponente aus Polystyrol (Vergleichsbeispiel 1), aus Copolymeren von Styrol mit unterschiedlichen Anteilen an N-p-Toluylmaleinimid (Vergleichsbeispiele 2 bis 4) sowie aus PPE/Polystyrol-Mischungen mit unterschiedlichen Anteilen an PPE bestand (Vergleichsbeispiele 5 bis 7).

Die Zusammensetzung der Polymeren ist in Tabelle 1 angegeben. Der Treibmittelgehalt in den expandierbaren Styrolpolymerisaten betrug jeweils 5,5 Gew.-%, bezogen auf die Polymerkomponente. Die an den expandierbaren Styrolpolymerisaten oder den daraus hergestellten Formkörpern gemessenen Eigenschaften sind in Tabelle 2 aufgeführt. Die Prozentangaben beziehen sich auf das Gewicht.

### Beispiel 1

In einem druckfesten Kessel mit einem Fassungsvermögen von 40 1 wurde eine Mischung von 9450 g Styrol, 1050 g N-Phenyl-methacrylamid, 9,70 g Dibenzoylperoxid, 25,73 g t-Butylperbenzoat, 21 g Dicumylperoxid und 69,3 g Hexabromcyclododekan zu einer Lösung aus 21 kg Wasser, 16,8 g Na₄P₂O₇ und 27,1 g MgSO₄ · 7H₂O gegeben. Die Mischung wurde unter Rühren während 3 Stunden auf 85°C erhitzt, anschließend während 5 Stunden auf 115°C erhitzt, und bei dieser Temperatur für weitere 5 Stunden belassen. 85 Minuten nach Erreichen einer Temperatur von 80°C wurden 523 g einer 10 %igen wäßrigen Lösung von Polyvinylpyrrolidon (K-Wert nach Fikentscher 90) zugefügt. Nach weiteren 110 Minuten wurden 798 g Pentan in den Kessel gegeben.

Nach Beendigung der Polymerisation (nach insgesamt 13 Stunden) wurde der Kesselinhalt auf 20°C abgekühlt, der Inhalt abgelassen und die erhaltenen Perlen mittels eines Siebes der Maschenweite 0,05 mm vom Serum abgetrennt und gründlich ausgewaschen.

Das erhaltene Perlpolymerisat mit einem mittleren Teilchendurchmesser d' von 1,29 mm und einer Verteilungsbreite β von 19,4° (jeweils bestimmt nach Rosin-Rammler-Sperling-Bennett gemäß DIN 66145) wurde isoliert und getrocknet.

Zur Untersuchung der Expandierbarkeit diente ein mit einem Metallrahmen eingefaßtes Sieb (Maschenweite: 0,1 bis 0,2 mm) mit den Abmessungen 1000 x 800 x 250 mm, welches sich in einem abgeschlossenen Metallgehäuse mit Dampfzuleitung und Dampfabzugsvorrichtung befand.

Der Wasserdampf von 120°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 100 g der expandierbaren Perlpolymerisate mit einem Teilchendurchmesser zwischen 1,0 und 2,0 mm auf dem Drahtgewebe gleichmäßig verteilt, die Apparatur geschlossen und das Dampfventil geöffnet. Die Perlpolymerisate wurden für eine definierte Zeit mit Dampf unter Normaldruck behandelt. Dann wurde das Dampfventil wieder geschlossen und das Metallgehäuse geöffnet. Von dem vorgeschäumten Material wurde nach 24stündiger Trocknung an Luft (20°C/50 % relative Feuchtigkeit) die Schüttdichte bestimmt.

Durch Variation der Bedingungen konnte die erreichbare minimale Schüttdichte bestimmt werden.

Zur Herstellung von Formkörpern wurden vorgeschäumte Perlen mit einer Schüttdichte zwischen 15 und 30 g/l 12 Stunden zwischengelagert und anschließend in eine Form mit den Abmessungen 20x20x4 cm³ gefüllt. Die Boden- und Deckplatte mit einer Fläche von jeweils 20x20 cm² wiesen gleichmäßig verteilt Bohrungen auf, durch die Wasserdampf mit Temperaturen von 107 bis 130°C geleitet wurde. Unter weiterem Aufschäumen und Verschweißen der Perlen wurden Formkörper erhalten.

An den Formkörpern wurde die Wärmeformbeständigkeit (WFB) nach DIN 53 424 unter Druckbeanspruchung bestimmt. Die Vicat-Erweichungstemperatur Vicat B wurde nach dem in DIN 53 460 beschriebenen Verfahren B/50 bestimmt, wobei Proben verwendet wurden, welche zur Entfernung des Treibmittels in Dichlormethan gelöst, mit Methanol wieder ausgefällt, getrocknet und anschließend zu 5 mm dicken Tabletten (Durchmesser 2 cm) verpreßt worden waren.

Die Schmelzviskosität MVI wurde in Anlehnung an DIN 53 735 J mit einer Belastung von 10 kp bei 210°C bestimmt. Bei den Vergleichsbeispielen 6 und 7 wurde nach DIN 53 735 U mit einer Belastung von 10 kp bei 220°C gearbeitet.

Die Bestimmung der Viskositätszahl VZ erfolgte an 0,5 %igen Lösungen in Toluol (bei den Vergleichsbeispielen 2 bis 4 in THF).

### Beispiel 2

Es wurde gearbeitet wie in Beispiel 1, jedoch unter Verwendung von 8925 g Styrol und 1575 g N-Phenyl-methacrylamid.

### Beispiel 3

Es wurde gearbeitet wie in Beispiel 1, jedoch unter Verwendung von 8400 g Styrol und 2100 g N-Phenyl-methacrylamid. Außerdem wurde das Polyvinylpyrrolidon 80 Minuten nach Erreichen einer Temperatur von 80°C zugesetzt.

### Beispiel 4

Es wurde gearbeitet wie in Beispiel 1, jedoch unter Verwendung von 7350 g Styrol und 3150 g N-Phenyl-methacrylamid. Außerdem wurde das Polyvinylpyrrolidon 75 Minuten nach Erreichen einer Temperatur von 80°C zugesetzt.

### Beispiel 5

In einem druckfesten Kessel mit einem Fassungsvermögen von 40 1 wurde eine Mischung von 13140 g Styrol, 1460 g N-Phenyl-methacrylamid, 17,96 g Dibenzoylperoxid, 36,5 g t-Butylperbenzoat, 29,2 g Dicumylperoxid und 96,36 g Hexabromcyclododekan zu einer Mischung aus 16 kg Wasser, 12,8 g Na₄P₂O₇, 20,64 g MgSO₄.7H₂O und 0,32 g (NH₄)₂SO₄ gegeben. Die Mischung wurde unter Rühren während 3 Stunden auf 85°C erhitzt, anschließend während 5 Stunden auf 115°C erhitzt und bei dieser Temperatur für weitere 5 Stunden belassen. 85 Minuten nach Erreichen einer Temperatur von 80°C wurden 398,4 g einer 10%igen wäßrigen Lösung von Polyvinylpyrrolidon (K-Wert 90) zugefügt. Nach weiteren 110 Minuten wurden 1109,6 g Pentan in den Kessel gegeben.

### Beispiel 6

In einem druckfesten Kessel wurde eine Mischung von 9450 g Styrol, 1050 g N-Phenyl-methylmethacrylamid, 13,40 g Dibenzoylperoxid, 25,20 g t-Butylperbenzoat zu einer Mischung aus 21 kg Wasser, 21,0 g Na₄P₂O₇ und 33,6 g MgSO₄.7H₂O gegeben. Die Mischung wurde unter Rühren während 3 Stunden auf 90°C erhitzt, anschließend während 5 Stunden auf 120°C erhitzt und bei dieser Temperatur für weitere 4 Stunden belassen. 95 Minuten nach Erreichen einer Temperatur von 80°C wurden 1029 g einer 10%igen wäßrigen Lösung von Polyvinylpyrrolidon (K-Wert nach Fikentscher 90) zugefügt. Nach weiteren 100 Minuten wurden 798 g Pentan in den Kessel gegeben.

### Beispiel 7

Es wurde wie in Beispiel 1 gearbeitet, jedoch unter Verwendung von 8400 g Styrol und 2100 g N-Cyclohexyl-methacrylamid. Außerdem wurde das Polyvinylpyrrolidon 80 Minuten nach Erreichen einer Temperatur von 80°C zugegeben.

### Beispiel 8

Es wurde wie in Beispiel 1 gearbeitet, jedoch unter Verwendung von 7350 g Styrol und 3150 g N-Cyclohexyl-methacrylamid. Außerdem wurde das Polyvinylpyrrolidon 75 Minuten nach Erreichen einer Temperatur von 80°C zugegeben.

### Vergleichsbeispiel 1

Es wurde wie in Beispiel 5 gearbeitet, jedoch unter Verwendung von 14600 g Styrol als einzigem Monomeren. Außerdem wurde das Polyvinylpyrrolidon 115 Minuten nach Erreichen einer Temperatur von 80°C zugegeben und das Pentan nach weiteren 80 Minuten.

### Vergleichsbeispiel 2

In einem druckfesten Kessel mit einem Fassungsvermögen von 40 1 wurde eine Mischung von 13375 g Styrol, 725 g N-p-Toluylmaleinimid, 18,53 g Dibenzoylperoxid, 34,8 g t-Butylperbenzoat zu einer Mischung aus 16 kg Wasser, 16 g Na₄P₂O₇, 25,6 g MgSO₄.7H₂O gegeben. Die Mischung wurde unter Rühren während 3 Stunden auf 85°C erhitzt, anschließend während 5 Stunden auf 115°C erhitzt und bei dieser Temperatur für weitere 5 Stunden belassen. 80 Minuten nach Erreichen einer Temperatur von 80°C wurden 532,5 g einer 10%igen wäßrigen Lösung von Polyvinylpyrrolidon (K-Wert 90) zugefügt. Nach weiteren 115 Minuten wurden 1056 g Pentan in den Kessel gegeben.

Die erhaltenen Perlen wiesen nach dem Vorschäumen Löcher auf der Oberfläche sowie eine grobe Zellstruktur im Inneren auf.

### Vergleichsbeispiel 3

Es wurde wie in Vergleichsbeispiel 2 gearbeitet, jedoch unter Verwendung von 13050 g Styrol, 1450 g N-p-Toluylmaleinimid und 710 g einer 10%igen wäßrigen Lösung von Polyvinylpyrrolidon. Die Zugabe des Polyvinylpyrrolidons mußte bereits 5 Minuten nach Erreichen einer Temperatur von 80°C erfolgen, um ein Koagulieren des Polymerisationsansatzes zu vermeiden. Die erhaltenen Perlen zeigten teilweise große Löcher auf der Oberfläche und ließen sich auch mit überhitztem Wasserdampf nur schlecht schäumen. Nach der Dampfbehandlung wiesen sie eine ungleichmäßige, grobe Zellstruktur auf. Formkörper waren mangels Verschweißung der Perlen nicht mehr zu erhalten.

### Vergleichsbeispiel 4

Es wurde wie im Vergleichsbeispiel 2 gearbeitet, jedoch unter Verwendung von 12325 g Styrol und 2175 g N-p-Toluylmaleinimid. Außerdem erfolgte die Polyvinylpyrrolidon-Zugabe sofort nach Erreichen einer Temperatur von 80°C.

Die Perlen waren zum Teil nicht völlig rund, hatten Löcher an der Oberfläche und ließen sich auch durch Dampf von 121°C kaum aufschäumen. Die nach der Dampfbehandlung erhaltenen Perlen wiesen nur sehr wenige, stark unterschiedlich große Zellen auf.

### Vergleichsbeispiele 5 bis 7

Die expandierbaren Styrolpolymerisate der Vergleichsbeispiele 5 bis 7 wurden durch Nachimprägnierung von Granulat (1,5 mm) aus Mischungen von Polystyrol (PS) (MW: 200 000) und Polyphenylenether (PPE) (MW:40000) mit der in Tabelle 1 angegebenen Zusammensetzung erhalten (MW: gewichtsmittleres Molekulargewicht).

Hierzu wurden in einem druckfesten Behälter zu 21 kg Wasser 530 g Tricalciumphosphat sowie 40 g einer 40%igen wäßrigen Lösung eines Gemisches von überwiegend sekundären Natriumalkansulfonaten mit der mittleren Kettenlänge C₁₅ (Mersolat® K30 der Fa. Bayer AG) gegeben. Dazu wurden 9 kg der granulierten PS/PPE-Mischung gegeben und der Behälter verschlossen.

Nach zweimaligem Spülen mit 2 bar Stickstoff wurde unter Rühren auf 130°C aufgeheizt. Nach Erreichen dieser Temperatur wurden 900 g Pentan während einer Dauer von 2 Stunden kontinuierlich zudosiert. Danach wurde noch 10 Stunden bei 130°C gerührt, anschließend auf Raumtemperatur abgekühlt, der Kessel entspannt und abgelassen.

Die in der Tabelle 2 angeführten Ergebnisse zeigen, daß erfindungsgemäße Formkörper, die ein Styrol/Methacrylamid-Copolymerisat enthalten, in dem als substituiertes Methacrylamid N-Phenylmethacrylamid oder N-Cyclohexylmethacrylamid einpolymerisiert ist, eine deutlich höhere Wärmeformbeständigkeit (WFB) aufweisen als die ausschließlich Polystyrol enthaltenden Formkörper. Die Erweichungstemperaturen des Copolymerisats aus 90 Gew.-% Styrol und 10 Gew.-% N-p-Toluylmaleinimid liegen zwar auch über der von Polystyrol, jedoch führt weder ein Vorschäumen mit drucklosem Wasserdampf noch mit Wasserdampf von höherem Druck zu den gewünschten Schüttdichten von 15 bis 30 g/l. Außerdem verschweißen die Perlen bei dem Versuch, Formkörper herzustellen, nicht und die Schaumstruktur ist sehr grob.

Demgegenüber besitzen die erfindungsgemäßen expandierbaren Styrolpolymerisate ein hervorragendes Expandiervermögen. Wie die erreichbaren minimalen Schüttdichten zeigen, ist das Expandiervermögen im Hinblick auf die im Vergleich zu Polystyrol deutlich höheren Erweichungstemperaturen der erfindungsgemäßen Styrol/Methacrylamid-Copolymerisate überraschenderweise nur geringfügig schlechter.

### Beispiele 9 bis 11

Aus den expandierbaren Styrolpolymerisaten von Beispiel 8 wurden gemäß Beispiel 1 Schaumstoffplatten mit den Abmessungen 40 x 40 x 5 cm und den jeweiligen Dichten 19,4 (Bsp. 9), 23,4 (Bsp. 10) und 26 kg/m³ (Bsp. 11) hergestellt. Die Schaumstoffplatten wurden jeweils für 2 Wochen unter Normalbedingungen und danach für 3 Tage bei 60°C gelagert. Die Platten wurden auf eine Dicke von 40 mm geschnitten und an diesen dann die Wärmeleitfähigkeit nach DIN 52 616 (Wärmestrom-Meßplatten-Gerät) bestimmt. Die Ergebnisse sind in Tabelle 3 aufgeführt.

### Beispiele 12 bis 14

Aus den expandierbaren Styrolpolymerisaten der Beispiele 1 bis 3 wurden gemäß Beispiel 1 jeweils Schaumstoffplatten mit den Abmessungen 20 x 20 x 4 cm hergestellt. An diesen wurde mittels eines Anacon®-Gerätes die Wärmeleitfähigkeit bestimmt. Der bei der dort vorgegebenen mittleren Plattentemperatur von 24°C gemessene Wert von 35,3 mW/(m*K) wurde mittels eines Rechenprogramms auf der Basis von RS/1 der Firma BBN auf eine mittlere Plattentemperatur von 10°C entsprechend DIN 52616 umgerechnet. Die auf diese Weise errechneten Werte sind in der Tabelle 3 aufgeführt.

### Vergleichsbeispiele 8 bis 10

Aus den expandierbaren Styrolpolymerisaten des Vergleichsbeispiels 1 wurden Schaumstoffplatten mit den Abmessungen 40 x 40 x 5 cm und den jeweiligen Dichten 19,5 (Vgl.Bsp. 8), 23,5 (Vgl.Bsp. 9) und 26 kg/m³ (Vgl.Bsp. 10) hergestellt und die Wärmeleitfähigkeiten gemäß Beispiel 9 bestimmt. Die Ergebnisse sind in der Tabelle 3 aufgeführt.

### Vergleichsbeispiele 11 bis 13

Aus expandierbaren Styrolpolymerisaten, die wie in Beispiel 6 beschrieben, jedoch unter Verwendung von Styrol als alleinigem Monomeren, erhalten wurden, wurden Schaumstoffplatten mit den Abmessungen 40 x 40 x 5 cm und den jeweiligen Dichten 19,5 (Vgl.Bsp. 11), 23,5 (Vgl.Bsp. 12) und 26 kg/m³ (Vgl.Bsp. 13) hergestellt und die Wärmeleitfähigkeiten gemäß Beispiel 9 bestimmt. Die Ergebnisse sind in der Tabelle 3 aufgeführt.

### Vergleichsbeispiel 14

Expandierbare Styrolpolymerisate, die durch Nachimprägnierung gemäß Vgl.Bsp. 5 von Granulat (1,5 mm) aus einer Mischung von 76 Gew.-% Polystyrol (MW: 200 000) und 24 Gew.-% Polyphenylenether (PPE) (MW: 40 000) erhalten wurden, wurden in einem druckfesten Vorschäumkasten der Fa. Händle auf eine Schüttdichte von 30 kg/m³ vorgeschäumt. Aus den vorgeschäumten Partikeln wurde gemäß Beispiel 9 eine Schaumstoffplatte mit einer Dichte von 30 kg/m³ hergestellt und an dieser entsprechend Beispiel 9 die Wärmeleitfähigkeit bestimmt (vgl. Tabelle 3).

Wie sich aus der Tabelle 3 ergibt, weisen Schaumstoffe auf der Basis der erfindungsgemäßen expandierbaren Styrolpolymerisate (Beispiele 9 bis 14) eine geringere Wärmeleitfähigkeit auf als solche, bei denen das zugrundeliegende Polymer Polystyrol (Vergleichsbeispiele 8 bis 13) oder eine Polystyrol/Polyphenylenether(76/24)-Mischung (Vgl.Bsp. 14) ist.

### Beispiele 15 bis 17

Die expandierbaren Styrolpolymerisate der Beispiele 3 (Bsp. 15), 4 (Bsp. 16) und 8 (Bsp. 17) wurden jeweils vorgeschäumt und anschließend zu Schaumstoffplatten mit einer Dichte von 30 kg/m³ ausgeschäumt. Aus jeder dieser Schaumstoffplatten wurden Probekörper mit den Abmessungen 40 x 50 x 50 mm geschnitten. Diese wurden gewogen und anschließend für 3 Tage unter NormalbediRgungen in Dieselöl gelagert. Die Ergebnisse sind in der Tabelle 4 dargestellt.

### Vergleichsbeispiel 15

Aus ölbeständigen, expandierbaren Styrolpolymerisaten gemäß der DE-A-39 01 329 auf der Basis eines Styrol/Acrylnitril(SAN)-Copolymeren mit einem Acrylnitril-Gehalt von 6 Gew.-%, das durch Suspensionspolymerisation von Styrol, in dem ein SAN-Copolymer aus 25 Gew.-% Acrylnitril und 75 Gew.-% Styrol aufgelöst war, hergestellt wurde, wurde eine Schaumstoffplatte mit einer Dichte von 15,5 kg/cm³ hergestellt. An dieser wurde wie in Beispiel 15 beschrieben die Aufnahme von Dieselöl gemessen (vgl. Tabelle 4).

### Vergleichsbeispiel 16

An der Schaumstoffplatte von Vergleichsbeispiel 14 wurde wie in Beispiel 15 beschrieben die Aufnahme von Dieselöl gemessen (vgl. Tabelle 4).

Wie sich aus der Tabelle 4 ergibt, weisen Schaumstoffe auf der Basis der erfindungsgemäßen expandierbaren Styrolpolymerisate eine gute Ölbeständigkeit auf.

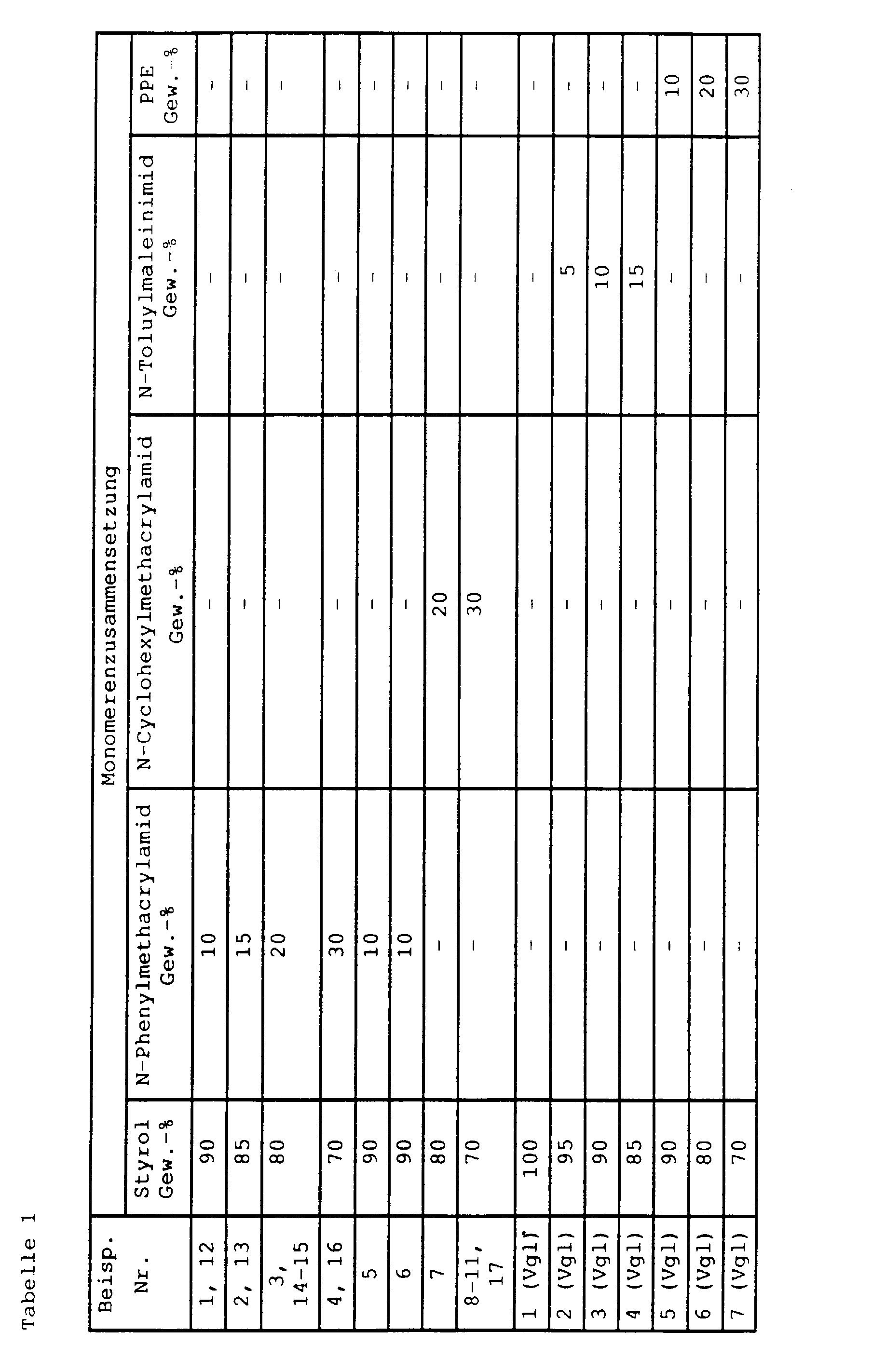

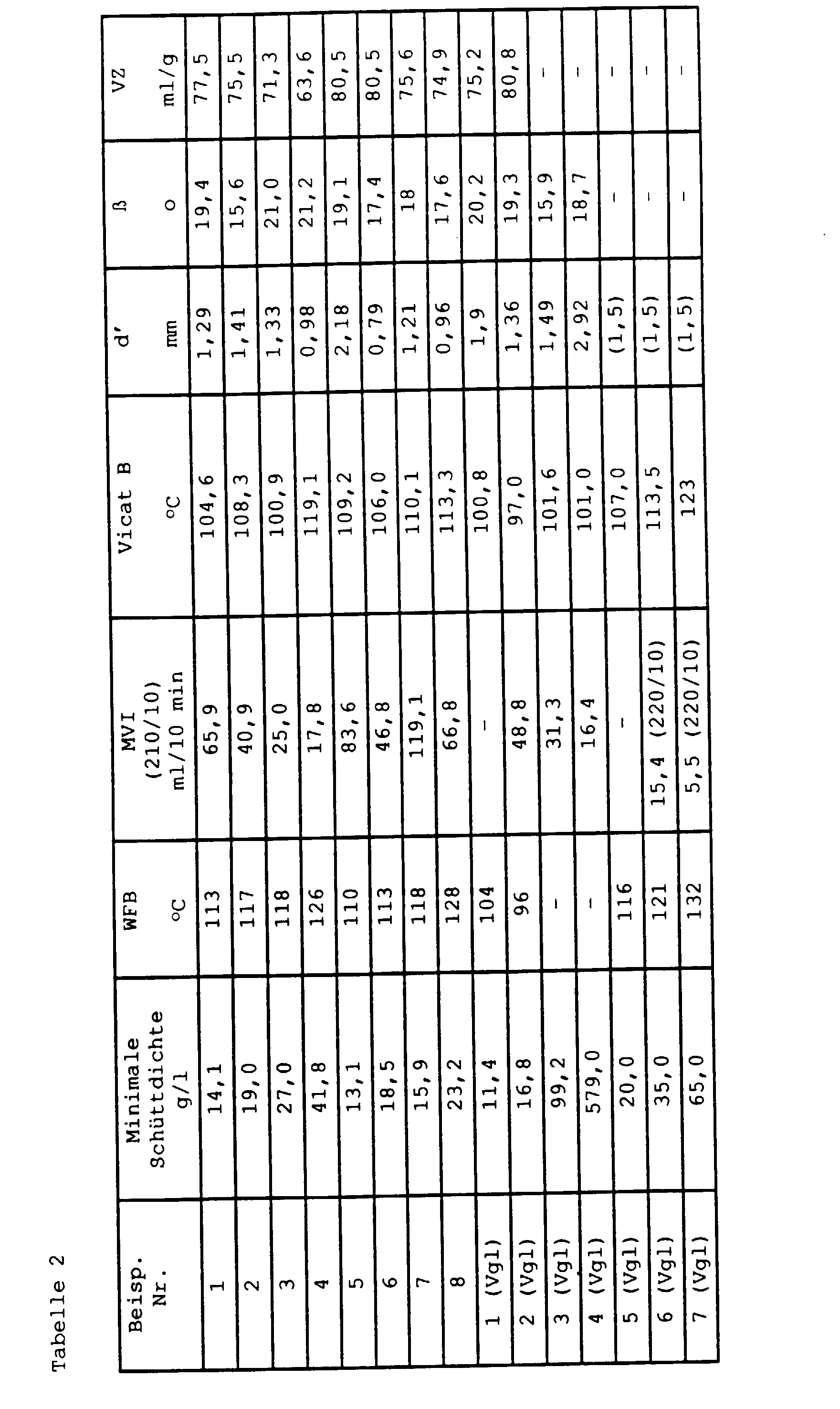

**Tabelle 3**

| Beispiel Nr. | Schaumstoffdichte [kg/m³] | Wärmeleitfähigkeit [mW*m⁻¹*K⁻¹] |
|---|---|---|
| 9 | 19,4 | 33,6 |
| 10 | 23,4 | 31,8 |
| 11 | 26 | 31,0 |
| 12 | 17,5 | 33,1 |
| 13 | 24,4 | 31,7 |
| 14 | 20 | 31,6 |
| 8 (Vgl.) | 19,5 | 34,9 |
| 9 (Vgl.) | 23,5 | 33,7 |
| 10 (Vgl.) | 26 | 33,3 |
| 11 (Vgl.) | 19,5 | 36,3 |
| 12 (Vgl.) | 23,5 | 34,8 |
| 13 (Vgl.) | 26 | 34,2 |
| 14 (Vgl.) | 30 | 34,0 |

**Tabelle 4**

| Beispiel | dL [%] | dB [%] | dH [%] | Ölaufnahme [Vol.-%] |
|---|---|---|---|---|
| 15 | - 0,47 | - 0.21 | 0,33 | 3,93 |
| 16 | - 0,05 | - 0,02 | 0,01 | 3,59 |
| 17 | 0,0 | - 0,1 | 0,11 | 3,22 |
| 15 (Vgl.) | 0,05 | 0,02 | 0,01 | 3,6 |
| 16 (Vgl.) | 0,17 | 0,66 | 0,13 | 14,2 |

## Patentansprüche

1. Expandierbare Styrolpolymerisate, enthaltend
a) 0 bis 90 Gew.-% eines von b) unterschiedlichen Styrolpolymerisats oder Styrolcopolymerisats mit mindestens 50 Gew.-% einpolymerisiertem Styrol,
b) 10 bis 100 Gew.-% eines Styrol/Methacrylamid-Copolymerisats, das zu 0,5 bis 50 Gew.-% aus mindestens einem einpolymerisierten N-substituierten Methacrylamid der allgemeinen Formel I 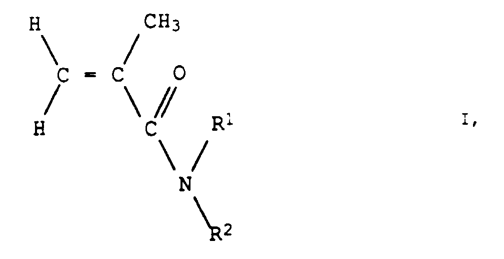 worin R¹ und R² gleich oder verschieden sind und Wasserstoff, C₁- bis C₁₅-Alkyl, C₆- bis C₁₆-Cycloalkyl oder C₆- bis C₂₀-Aryl bedeuten, wobei im Falle von Substituenten R¹ und R² mit mindestens 2 Kohlenstoffatomen mindestens 2 Kohlenstoffatome über Heteroatome verknüpft sein können, besteht, und
c) 1 bis 15 Gew.-%, bezogen auf die Summe von a) und b), eines aliphatischen C₃- bis C₉-Kohlenwasserstoffs und/oder Kohlendioxid als Treibmittel.

2. Expandierbare Styrolpolymerisate nach Anspruch 1, dadurch gekennzeichnet, daß R¹ Wasserstoff und R² C₆- bis C₁₆-Cycloalkyl oder C₆- bis C₂₀-Aryl bedeutet.

3. Expandierbare Styrolpolymerisate nach Anspruch 2, dadurch gekennzeichnet, daß R² Cyclohexyl oder Phenyl bedeutet.

4. Verfahren zur Herstellung expandierbarer Styrolpolymerisate gemäß Anspruch 1, dadurch gekennzeichnet, daß man eine Lösung von mindestens einem substituierten Methacrylamid der Formel I 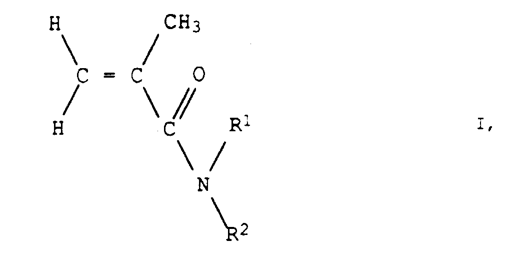 worin R¹ und R² gleich oder verschieden sind und Wasserstoff, C₁- bis C₁₅-Alkyl, C₆- bis C₁₆-Cycloalkyl oder C₆-bis C₂₀-Aryl bedeuten, wobei im Falle von Substituenten R¹ und R² mit mindestens 2 Kohlenstoffatomen mindestens 2 Kohlenstoffatome über Heteroatome verknüpft sein können, und gegebenenfalls eines Styrolpolymerisats oder Styrolcopolymerisats mit mindestens 50 Gew.-% einpolymerisiertem Styrol, in Styrol in wäßriger Suspension polymerisiert und während oder nach der Polymerisation das Treibmittel zugibt.

5. Schaumstoffe der Dichte 0,01 bis 0,2 g/cm³, enthaltend
a) 0 bis 90 Gew.-% eines von b) unterschiedlichen Styrolpolymerisats oder Styrolcopolymerisats mit mindestens 50 Gew.-% einpolymerisiertem Styrol,
b) 10 bis 100 Gew.-% eines Styrol/Methacrylamid-Copolymerisats, das zu 0,5 bis 50 Gew.-% aus mindestens einem einpolymerisierten N-substituierten Methacrylamid der allgemeinen Formel I 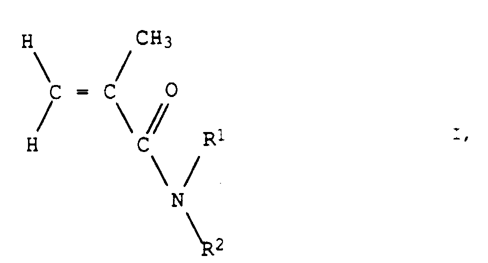 worin R¹ und R² gleich oder verschieden sind und Wasserstoff, C₁- bis C₁₅-Alkyl, C₆- bis C₁₆-Cycloalkyl oder C₆- bis C₂₀-Aryl bedeuten, wobei im Falle von Substituenten R¹ und R² mit mindestens 2 Kohlenstoffatomen mindestens 2 Kohlenstoffatome über Heteroatome verknüpft sein können, besteht.

## Claims

1. An expandable styrene polymer comprising
a) from 0 to 90 % by weight of a styrene polymer or styrene copolymer other than b) containing at least 50 % by weight of copolymerized styrene,
b) from 10 to 100 % by weight of a styrene/methacrylamide copolymer comprising from 0.5 to 50 % by weight of at least one copolymerized N-substituted methacrylamide of the formula I 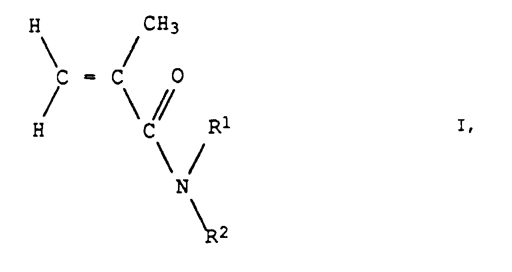 where R¹ and R² are identical or different and are hydrogen, C₁- to C₁₅-alkyl, C₆- to C₁₆-cycloalkyl or C₆- to C₂₀-aryl, it being possible, if R¹ and R² contain at least 2 carbon atoms, for at least 2 carbon atoms to be linked via hetero atoms, and
c) from 1 to 15 % by weight, based on the sum of a) and b), of an aliphatic C₃- to C₉-hydrocarbon and/or carbon dioxide as blowing agent.

2. An expandable styrene polymer as claimed in claim 1, wherein R¹ is hydrogen and R² is C₆- to C₁₆-cycloalkyl or C₆- to C₂₀-aryl.

3. An expandable styrene polymer as claimed in claim 2, wherein R² is cyclohexyl or phenyl.

4. A process for the preparation of an expandable styrene polymer as claimed in claim 1, which comprises polymerizing a styrene solution of at least one substituted methacrylamide of the formula I 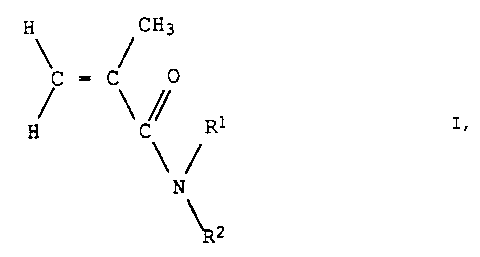 where R¹ and R² are identical or different and are hydrogen, C₁- to C₁₅-alkyl, C₆- to C₁₆-cycloalkyl or C₆- to C₂₀-aryl, it being possible, if R¹ and R² contain at least 2 carbon atoms, for at least 2 carbon atoms to be linked via hetero atoms, and, if desired, a styrene polymer or styrene copolymer containing at least 50 % by weight of copolymerized styrene, in aqueous suspension and adding the blowing agent during or after the polymerization.

5. A foam having a density of from 0.01 to 0.2 g/cm³, comprising
a) from 0 to 90 % by weight of a styrene polymer or styrene copolymer other than b) containing at least 50 % by weight of copolymerized styrene,
b) from 10 to 100 % by weight of a styrene/methacrylamide copolymer comprising from 0.5 to 50 % by weight of at least one copolymerized N-substituted methacrylamide of the formula I 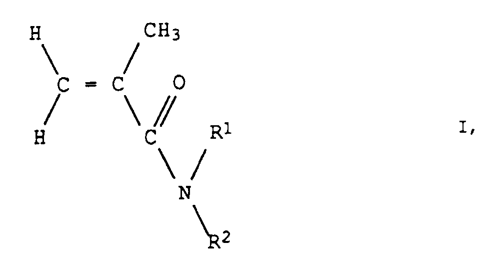 where R¹ and R² are identical or different and are hydrogen, C₁- to C₁₅-alkyl, C₆- to C₁₆-cycloalkyl or C₆- to C₂₀-aryl, it being possible, if R¹ and R² contain at least 2 carbon atoms, for at least 2 carbon atoms to be linked via hetero atoms.

## Revendications

1. Polymères de styrène expansibles, contenant
a) 0 à 90% en poids d'un polymère de styrène ou d'un copolymère de styrène différent de b), contenant au moins 50% en poids de styrène en liaison polymère,
b) 10 à 100% en poids d'un copolymère styrène/ méthacrylamide qui se compose, pour 0,5 à 50% en poids, d'au moins un méthacrylamide N-substitue en liaison polymère, de formule générale I 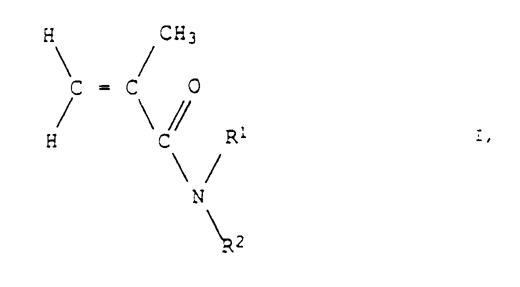 dans laquelle R¹ et R² sont identiques ou différents et représentent chacun un atome d'hydrogène ou un reste alkyle en C₁-C₁₅, cycloalkyle en C₆-C₁₆ ou aryle en C₆-C₂₀, 2 atomes de carbone au moins, dans le cas de substituants R¹ et R² à 2 atomes de carbone au moins, pouvant être reliés avec interposition d'hétéroatomes, et
c) 1 à 15% en poids, par rapport à la somme de a) et b), d'un hydrocarbure aliphatique en C₃-C₉ et/ou d'anhydride carbonique en tant qu'agent moussant.

2. Polymères de styrène expansibles selon la revendication 1, caractérisés en ce que R¹ représente un atome d'hydrogène et R² un reste cycloalkyle en C₆-C₁₆ ou aryle en C₆-C₂₀.

3. Polymères de styrène expansibles selon la revendication 2, caractérisés en ce que R² représente un reste cyclohexyle ou phényle.

4. Procédé de préparation de polymères de styrène expansibles selon la revendication 1, caractérisé en ce que l'on polymérise en suspension aqueuse une solution, dans du styrène, d'au moins un méthacrylamide substitué de formule I 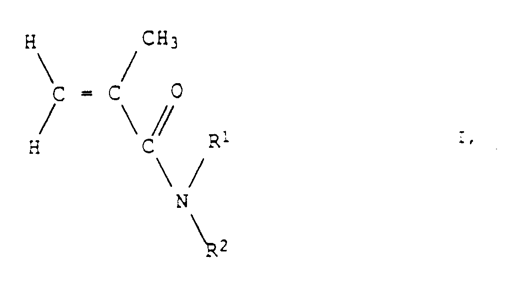 dans laquelle R¹ et R² sont identiques ou différents et représentent chacun un atome d'hydrogène ou un reste alkyle en C₁-C₁₅, cycloalkyle en C₆-C₁₆ ou aryle en C₆-C₂₀, 2 atomes de carbone au moins, dans le cas de substituants R¹ et R² à 2 atomes de carbone au moins, pouvant être reliés avec interposition d'hétéroatomes, et éventuellement d'un polymère de styrène ou d'un copolymère de styrène contenant au moins 50% en poids de styrène en liaison polymère, et on ajoute l'agent moussant pendant ou après la polymérisation.

5. Mousses de 0,01 à 0,2 g/cm³ de masse volumique, contenant
a) 0 à 90% en poids d'un polymère de styrène ou d'un copolymère de styrène différent de b), contenant au moins 50% en poids de styrène en liaison polymère,
b) 10 à 100% en poids d'un copolymère styrène/ méthacrylamide qui se compose, pour 0,5 à 50% en poids, d'au moins un méthacrylamide N-substitué en liaison polymère, de formule générale I 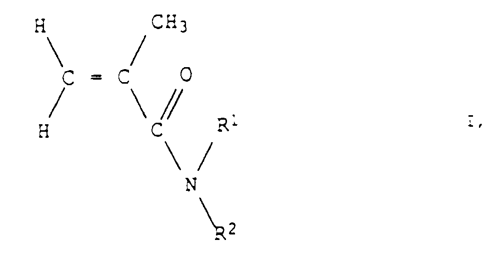 dans laquelle R¹ et R² sont identiques ou différents et représentent chacun un atome d'hydrogène ou un reste alkyle en C₁-C₁₅, cycloalkyle en C₆-C₁₆ ou aryle en C₆-C₂₀, 2 atomes de carbone au moins, dans le cas de substituants R¹ et R² à 2 atomes de carbone au moins, pouvant être reliés avec interposition d'hétéroatomes.
